# EUROPÄISCHE PATENTSCHRIFT

(11) **EP 3 519 222 B1**
(45) Veröffentlichungstag und Bekanntmachung des Hinweises auf die Patenterteilung: **25.11.2020**
(21) Anmeldenummer: 17751658.0
(22) Anmeldetag: 21.07.2017
(51) Int. Cl.: B60K 1/02, B60K 17/02, B60K 17/04, B60K 17/08, B60K 17/16, B60K 17/354

(54) **ANTRIEBSVORRICHTUNG FÜR EINE FAHRZEUGACHSE, INSBESONDERE HINTERACHSE**
DRIVE DEVICE FOR A VEHICLE AXLE, IN PARTICULAR A REAR AXLE
DISPOSITIF D'ENTRAÎNEMENT POUR UN ESSIEU DE VÉHICULE, EN PARTICULIER ESSIEU ARRIÈRE

(30) Priorität: 28.09.2016 DE 102016218717
(43) Veröffentlichungstag der Anmeldung: 07.08.2019
(73) Patentinhaber: Audi AG, 85045 Ingolstadt (DE)
(72) Erfinder: HUMMEL, Steffen, 71287 Flacht (DE)
(86) Internationale Anmeldenummer: PCT/EP2017/068537
(87) Internationale Veröffentlichungsnummer: WO 2018/059783

(56) Entgegenhaltungen:
- DE-A1-102006 057 857
- DE-A1-102010 005 789
- DE-A1-102011 088 648
- DE-A1-102015 008 153
- US-A1- 2014 371 016

## Beschreibung

Die Erfindung betrifft eine Antriebsvorrichtung für eine Fahrzeugachse, insbesondere Hinterachse, eines zweispurigen Fahrzeugs mit elektrischem Antrieb nach dem Oberbegriff des Patentanspruches 1.

Bei einem Fahrzeug mit elektrischem Antrieb kann die elektrisch angetriebene Vorderachse eine Elektromaschine aufweisen, die beispielhaft achsparallel zu den, zu den Fahrzeugrädern geführten Flanschwellen angeordnet ist. In diesem Fall kann die Vorderachse eine Stirnradstufe aufweisen, mit der die Elektromaschinen-Welle trieblich mit einem zwischen den beiden Flanschwellen positionierten Achsdifferenzial verbindbar ist. Das Achsdifferenzial treibt wiederum auf die beiden, zu den Fahrzeugrädern führenden Flanschwellen ab. Bei einer ebenfalls elektrisch angetriebenen Hinterachse können zwei Elektromaschinen verbaut sein, die jeweils einem Fahrzeugrad der Hinterachse zugeordnet sind. Deren Elektromaschinen-Wellen können in einer gattungsgemäßen Antriebsvorrichtung über ein erstes Schaltelement sowie eine erste Übersetzungsstufe (Stirnradstufe) mit der ersten Flanschwelle trieblich verbindbar sein. In gleicher Weise kann die zweite Elektromaschine über eine zweite Übersetzungsstufe (Stirnradstufe) sowie einem zweiten Schaltelement mit der zweiten Flanschwelle in Verbindung sein. In diesem Fall treibt jede der beiden Elektromaschinen radselektiv jeweils ein Fahrzeugrad an, so dass kein Achsdifferenzial erforderlich ist, mit dem eine Momentenverteilung zwischen den Fahrzeugrädern erfolgen kann.

Bei der oben skizzierten Hinterachse treiben die beiden Elektromaschinen bei einer Geradeausfahrt die Fahrzeugräder mit gleich großen Antriebsmomenten an. In bestimmten Fahrsituationen, zum Beispiel bei einer Kurvenfahrt, kann das Fahrverhalten durch eine Drehmoment-Umverteilung (Torque-Vectoring oder Quersperrenfunktion) unterstützt werden. So kann bei einer Kurvenfahrt am Kurveneingang ein Antriebsmoment zum kurvenäußeren Fahrzeugrad verlagert werden (Torque-Vectoring). Alternativ/zusätzlich kann bei der Kurvenfahrt am Kurvenausgang das Antriebsmoment zum kurveninneren Fahrzeugrad verlagert werden (Quersperrenfunktion). Diese Drehmoment-Verlagerung erfolgt in der oben angegebenen Hinterachse durch entsprechende Ansteuerung der ersten und zweiten Elektromaschinen.

Aus der US 2014 0332301 A1 ist ein Antriebsstrang eines Elektrofahrzeugs mit zwei Elektromaschinen bekannt. Eine Hinterachse des Fahrzeugs weist ein Differential sowie die zwei Elektromaschinen auf, die über ein Getriebe gekoppelt sind und einzeln oder gemeinsam arbeiten. Aus der DE 10 2011 086 062 A1 ist eine elektrifizierte Antriebsanordnung für ein Hybridfahrzeug bekannt, in der zwei Elektromaschinen an der Hinterachse des Hybridfahrzeugs angeordnet sind und über ein Differentialgetriebe und Koppelelemente mit mehrstufigem Getriebe verbunden sind. Aus der DE10 2011 004 410 A1 ist eine Hybridantriebseinheit für ein Kraftfahrzeug bekannt, bei der eine Elektromaschine über ein mehrstufiges Planetengetriebe mit einem Differential einer Hinterachse verbunden ist.

Die DE 10 2010 005789 A1 offenbart eine Antriebsvorrichtung für eine Fahrzeugachse eines Fahrzeugs mit elektrischem Antrieb, wobei jedem Fahrzeugrad der Fahrzeugachse eine Elektromaschine zugeordnet ist, deren Elektromaschinen-Wellen über jeweils ein erstes und ein zweites Schaltelement trieblich mit einer ersten und einer zweiten Flanschwelle der Fahrzeugräder verbindbar sind. Ferner weist die Antriebsvorrichtung ein Achsdifferenzial aufweist, das ausgangsseitig auf die Flanschwellen der Fahrzeugräder abtreibt und eingangsseitig trieblich über ein drittes und viertes Schaltelement mit den Elektromaschinen-Wellen verbindbar ist.

Die Aufgabe der Erfindung besteht darin, eine Antriebsvorrichtung für eine elektrisch angetriebene Fahrzeugachse bereitzustellen, bei der mit einfachen Mitteln eine Funktionserweiterung ermöglicht ist, und zwar bei geringem Bauraumbedarf sowie bei gesteigerter Fahrdynamik.

Die Aufgabe ist durch die Merkmale des Patentanspruches 1 gelöst. Bevorzugte Weiterbildungen der Erfindung sind in den Unteransprüchen offenbart.

Es wird ein radselektiver Antrieb ermöglicht, bei dem ein erster Momentenfluss von der ersten Elektromaschine über das erste Schaltelement zur ersten Flanschwelle übertragen wird. Unabhängig davon wird ein zweiter Momentenfluss von der zweiten Elektromaschine über das zweite Schaltelement zur zweiten Flanschwelle übertragen.

Bei geschaltetem ersten Übersetzungsgang sind die dritten und vierten Schaltelemente geöffnet, während bei geschaltetem zweiten Übersetzungsgang die ersten und zweiten Schaltelemente geöffnet sind. In einer technischen Umsetzung können die ersten bis vierten Schaltelemente lastschaltbar ausgeführt sein. Beispielhaft können die ersten und zweiten Schaltelemente Freilaufkupplungen sein, während die dritten und vierten Schaltelemente als Lamellenkupplungen ausgeführt sind. Das Achsdifferenzial kann exemplarisch ein Kegeldifferenzial oder ein Stirnraddifferenzial bzw. ein Planetendifferenzial sein. Üblicherweise ist das Achsdifferenzial so ausgelegt, dass eine gleich große Antriebsmoment-Verteilung auf die davon wegführende erste Flanschwelle und zweite Flanschwelle erfolgt.

Bei den obigen Achsaufbau kann eine Drehmoment-Umverteilung (das heißt ein Torque-Vectoring oder eine Quersperrenfunktion) sowohl im ersten Übersetzungsgang als auch im zweiten Übersetzungsgang wie folgt realisiert werden: So kann bei geschaltetem ersten Übersetzungsgang (das heißt die ersten und zweiten Schaltelemente sind geschlossen) zumindest kurzzeitig das dritte oder vierte Schaltelement geschlossen werden. Dadurch wird das von der ersten oder zweiten Elektromaschine erzeugte Antriebsmoment in ein Teil-Antriebsmoment, das über das erste/zweite Schaltelement direkt zur ersten/zweiten Flanschwelle übertragen wird, und in ein Teil-Antriebsmoment aufgeteilt, das über das dritte/vierte Schaltelement zum Achsdifferenzial übertragen wird und von dort gleichmäßig auf das linke und rechte Fahrzeugrad aufgeteilt wird.

Bei geschaltetem zweiten Übersetzungsgang erfolgt dagegen ein Differenzial-Antrieb, bei dem die ersten und zweiten Schaltelemente geöffnet sind und ein von der ersten und/oder zweiten Elektromaschine erzeugtes Antriebsmoment über das dritte und/oder vierte Schaltelement zum Achsdifferenzial übertragen wird.

Bei geschaltetem zweiten Übersetzungsgang (das heißt die dritten und vierten Schaltelemente sind geschlossen) wird die Drehmoment-Umverteilung wie folgt realisiert: So kann das erste oder zweite Schaltelement für die Drehmoment-Umverteilung zumindest kurzzeitig geschlossen werden. Dadurch wird das von der ersten oder zweiten Elektromaschine erzeugte Antriebsmoment in ein Teil-Antriebsmoment, das über das erste oder zweite Schaltelement direkt zur ersten oder zweiten Flanschwelle übertragen wird, und in ein Teil-Antriebsmoment aufgeteilt, das über das dritte oder vierte Schaltelement zum Achsdifferenzial übertragen wird und gleichmäßig auf die linken und rechten Fahrzeugräder aufgeteilt wird.

Die ersten und zweiten Elektromaschinen-Wellen können bevorzugt über zumindest eine erste Übersetzungsstufe und eine zweite Übersetzungsstufe (bevorzugt Stirnradstufen) mit der ersten und der zweiten Flanschwelle verbunden sein. In einer technischen Umsetzung können die erste und die zweite Elektromaschinen-Welle über das dritte und das vierte Schaltelement jeweils mit zumindest einer Zwischenwelle koppelbar sein, die über eine dritte Übersetzungsstufe auf die Achsdifferenzial-Eingangsseite abtreibt.

Nachfolgend werden besonders kompakte sowie bauraumsparende Ausführungsvarianten der Antriebsvorrichtung erläutert: So können die ersten und zweiten Elektromaschinen-Wellen in einer achsparallelen Anordnung zu den ersten und zweiten Flanschwellen positioniert sein, die zueinander koaxial verlaufen und eine Radachse der Fahrzeugräder definieren. In der obigen achsparallelen Anordnung können die ersten und zweiten Elektromaschinen mit Bezug auf eine Fahrzeugmittellängsebene spiegelbildlich positioniert sein, wobei die Elektromaschinen-Wellen in der Fahrzeugquerrichtung nach fahrzeuginnen aufeinander zulaufen.

Bei der obigen achsparallelen Anordnung können die erste und die zweite Übersetzungsstufe, das heißt bevorzugt Stirnradstufen, in der Fahrzeugquerrichtung innerhalb der beiden Elektromaschinen angeordnet sein. Zudem kann zwischen den beiden Übersetzungsstufen in der Fahrzeugquerrichtung betrachtet ein Bauraum bereitgestellt sein, in dem das dritte und das vierte Schaltelement sowie das Achsdifferenzial bauraumgünstig positionierbar ist. Die Elektromaschinen-Wellen können zudem über das dritte und das vierte Schaltelement bevorzugt mit einer gemeinsamen Zwischenwelle koppelbar sein, die koaxial zu den Elektromaschinen-Wellen verläuft.

Bevorzugt können das erste Schaltelement und das dritte Schaltelement koaxial zur ersten Elektromaschinen-Welle sowie achsparallel zu den Flanschwellen angeordnet sein. In gleicher Weise können das zweite Schaltelement und das vierte Schaltelement koaxial zur zweiten Elektromaschinen-Welle sowie achsparallel zu den Flanschwellen angeordnet sein.

In einer zweiten Ausführungsvariante können die ersten und zweiten Elektromaschinen in der Fahrzeuglängsrichtung mit Bezug auf die Flanschwellen achsgegenüber angeordnet sein. In diesem Fall können die beiden Elektromaschinen bevorzugt in der Fahrzeuglängsrichtung in Flucht hintereinander positioniert sein sowie mit Bezug auf die Fahrzeugmittellängsachse im Wesentlichen in einer Fahrzeughälfte angeordnet sein. Bei einer solchen Anordnung kann die dritte Übersetzungsstufe in zwei Stirnradstufen aufgeteilt sein, die jeweils auf die Achsdifferenzial-Eingangsseite abtreiben. Von den beiden Stirnradstufen ist eine erste Stirnradstufe über das dritte Schaltelement mit der ersten Elektromaschinen-Welle koppelbar. Eine zweite Stirnradstufe ist über das vierte Schaltelement mit der zweiten Elektromaschinen-Welle koppelbar. Speziell für eine in der Fahrzeugquerrichtung raumsparende Anordnung können die beiden Elektromaschinen in Längsflucht in einer ersten Längsebene, das dritte und das vierte Schaltelemente in Längsflucht in einer zweiten Längsebene, das erste Schaltelement sowie die erste Übersetzungsstufe in Längsflucht in einer dritten Längsebene, die dritte Übersetzungsstufe und das Achsdifferenzial in Längsflucht in einer vierten Längsebene sowie das zweite Schaltelement und die zweite Übersetzungsstufe in Längsflucht in einer fünften Längsebene angeordnet sein.

In einer alternativen Längs-Anordnung der beiden Elektromaschinen kann jede der Elektromaschinen-Wellen in einen elektromaschinenseitigen Wellenabschnitt, der mit dem Rotor der Elektromaschine zusammenwirkt, und in einen abtriebsseitigen Wellenabschnitt aufgeteilt sein. Der elektromaschinenseitige Wellenabschnitt und der abtriebsseitige Wellenabschnitt können über eine Getriebestufe, zum Beispiel über einen Kegelradtrieb, miteinander verbunden sein. Bei dieser Längs-Anordnung können die beiden Elektromaschinen zusammen mit den elektromaschinenseitigen Wellenabschnitten in Längsflucht zur Fahrzeuglängsrichtung ausgerichtet sein, während die abtriebsseitigen Wellenabschnitte zueinander koaxial sowie in Querflucht zur Fahrzeugquerrichtung verlaufen können. Der abtriebsseitige Wellenabschnitt der ersten Elektromaschinen-Welle kann über das erste Schaltelement und die erste Übersetzungsstufe trieblich mit der ersten Flanschwelle verbunden sein. Analog kann der abtriebsseitige Wellenabschnitt der zweiten Elektromaschinen-Welle über das zweite Schaltelement und die zweite Übersetzungsstufe trieblich mit der zweiten Flanschwelle verbunden sein. Zudem können die beiden abtriebsseitigen Wellenabschnitte der Elektromaschinen-Wellen jeweils über das dritte Schaltelement und über das vierte Schaltelement mit der Eingangsseite des Achsdifferenzials verbunden sein.

Alternativ zur obigen Anordnung können die Elektromaschinen in einer koaxialen Anordnung zu den ersten und zweiten Flanschwellen positioniert sein. In einer solchen koaxialen Anordnung können bevorzugt das dritte und das vierte Schaltelement sowie das Achsdifferenzial in der Fahrzeugquerrichtung zwischen den beiden Elektromaschinen positioniert sein. Die Elektromaschinen-Wellen können in diesem Fall als Hohlwellen ausgeführt sein, durch die die Flanschwellen nach fahrzeugaußen geführt sind. An den fahrzeugäußeren Enden der beiden Flanschwellen kann sich jeweils die erste Übersetzungsstufe und die zweite Übersetzungsstufe anschließen, die die Flanschwellen jeweils mit den Elektromaschinen-Wellen - unter Zwischenschaltung des ersten und des zweiten Schaltelementes - verbinden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: den Umriss eines elektrisch betriebenen Kraftfahrzeugs von oben mit hervorgehobenen, schematisch dargestellten Fahrzeugachsen;
- Figur 2: eine Antriebsvorrichtung für die Hinterachse des Fahrzeugs gemäß einem ersten Ausführungsbeispiel;
- Figur 3: eine Ansicht entsprechend der Figur 2 mit hervorgehobenem Antriebsmomentenfluss bei geschaltetem ersten Übersetzungsgang;
- Figur 4: eine Ansicht entsprechend der Figur 2 mit hervorgehobenem Antriebsmomentenfluss bei geschaltetem zweiten Übersetzungsgang;
- Figur 5: eine Ansicht entsprechend der Figur 3 mit einer zusätzlichen Drehmoment-Verlagerung auf die zum rechten Fahrzeugrad führende Flanschwelle;
- Figur 6: eine Ansicht entsprechend der Figur 2 mit einer Drehmoment-Verlagerung auf die zum rechten Fahrzeugrad führenden Flanschwelle;
- Figur 7 bis 10: jeweils Ansichten entsprechend der Figur 2 von Antriebsvorrichtungen gemäß einem zweiten, dritten, vierten und fünften Ausführungsbeispiel.

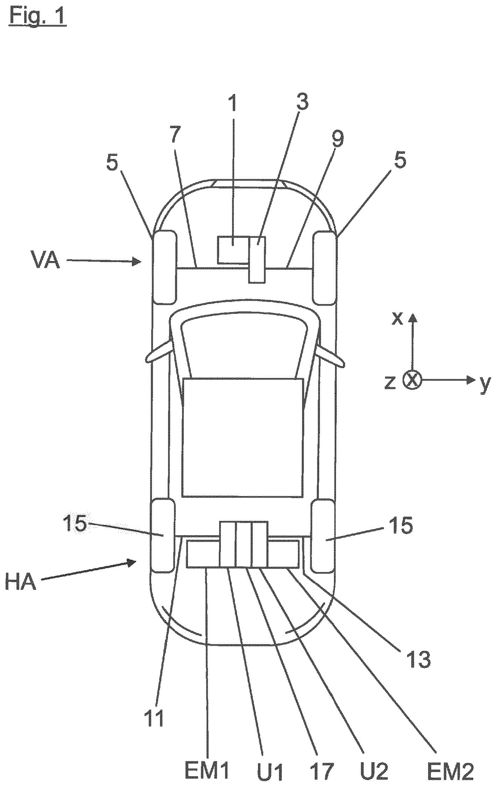

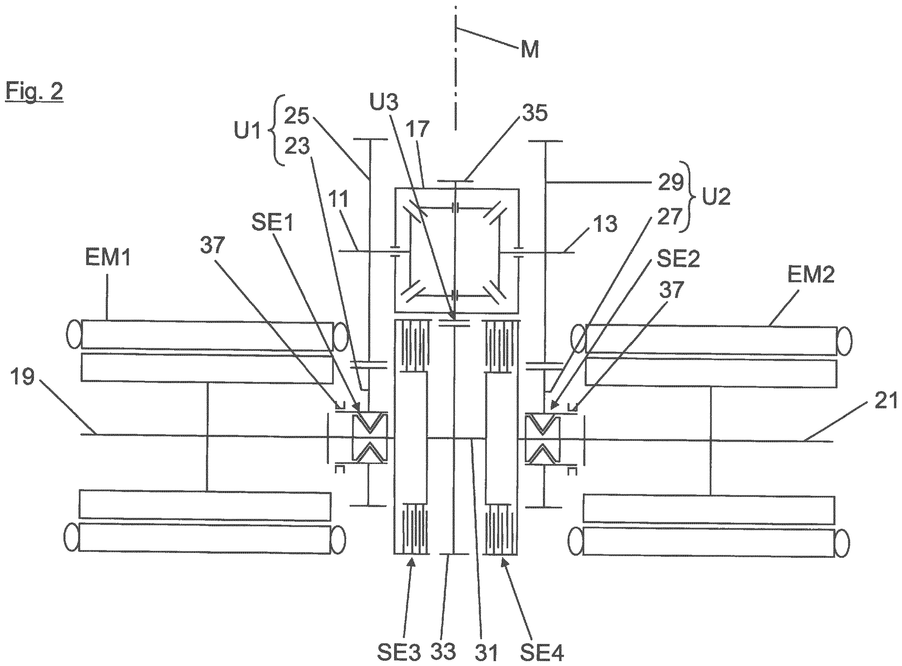

In der Figur 1 ist ein elektrisch betriebenes Kraftfahrzeug gezeigt, das eine elektrisch antreibbare Vorderachse VA und eine elektrisch antreibbare Hinterachse HA aufweist. Die Vorderachse VA ist mit genau einer Elektromaschine 1 ausgestattet, die über ein Vorderachsdifferenzial 3 auf die zum rechten und linken Vorderrad 5 führenden linken und rechten Flanschwellen 7, 9 abtreibt. Die Hinterachse HA weist eine Antriebsvorrichtung auf, bei der im Unterschied zur Vorderachse VA jedem der Hinterräder 15 jeweils eine Elektromaschine EM1, EM2 zugeordnet ist. Die beiden Elektromaschinen EM1, EM2 sind in der Figur 1 achsparallel zu den rechten und linken Flanschwellen 11, 13 angeordnet, die zueinander koaxial ausgerichtet sind und zu den Hinterrädern 15 führen sowie deren Radachsen definieren. Die erste und die zweite Elektromaschine EM1, EM2 sind mit Bezug auf eine Fahrzeugmittellängsebene M spiegelbildlich hinter den Flanschwellen 11, 13 positioniert. Zwischen den beiden Elektromaschinen EM1, EM2 ist eine erste Übersetzungsstufe U1 sowie eine zweite Übersetzungsstufe U2 und in etwa mittig ein Achsdifferenzial 17 positioniert. Das Achsdifferenzial 17 ist dabei in gängiger Praxis so ausgelegt, dass eine gleich große Antriebsmoment-Verteilung auf die erste und die zweite Flanschwelle 11, 13 erfolgt. Die oben in der Hinterachse HA verbauten Antriebskomponenten bilden zusammen eine Antriebsvorrichtung, deren Getriebestruktur nachfolgend anhand der Figur 2 erläutert ist:

So weisen in der Figur 2 die beiden Elektromaschinen EM1, EM2 jeweils Elektromaschinen-Wellen 19, 21 auf, die in der Fahrzeugquerrichtung y aufeinander zulaufen. Die Elektromaschinen-Welle 19 der ersten Elektromaschine EM1 ist über eine Freilaufkupplung SE1 mit einem Antriebszahnrad 23 verbunden, das zusammen mit einem drehfest auf der ersten Flanschwelle 11 angeordneten Abtriebsrad 25 die erste Übersetzungsstufe U1 bildet. In gleicher Weise ist auch die Elektromaschinen-Welle 21 der zweiten Elektromaschine EM2 über eine Freilaufkupplung SE2 mit einem Antriebszahnrad 27 drehfest verbunden, das zusammen mit einem drehfest auf der zweiten Flanschwelle 13 angeordneten Abtriebszahnrad 29 die zweite Übersetzungsstufe U2 (das heißt Stirnradstufe) bildet.

In der Figur 2 ist sowohl die erste als auch die zweite Elektromaschinen-Welle 19, 21 über die jeweilige Freilaufkupplung SE1, SE2 hinaus nach fahrzeuginnen verlängert und drehfest an einem Kupplungsgehäuse (das heißt Außenlamellenträger) eines dritten und eines vierten Schaltelementes SE3, SE4 angebunden, die beide als lastschaltbare Lamellenkupplungen realisiert sind. Die beiden Innenlamellenträger der Schaltelemente SE3 und SE4 sind über eine gemeinsame Zwischenwelle 31 miteinander verbunden, die koaxial zu den beiden Elektromaschinen-Wellen 19, 21 angeordnet ist. Die Zwischenwelle 31 trägt drehfest ein Zwischenzahnrad 33, das zusammen mit einem eingangsseitigen Außenzahnrad 35 des Achsdifferenzials 17 eine dritte Übersetzungsstufe U3 bildet. Das Achsdifferenzial 17 treibt ausgangsseitig auf die beiden Flanschwellen 11, 13 (das heißt Halbwellen der Hinterräder 15) ab.

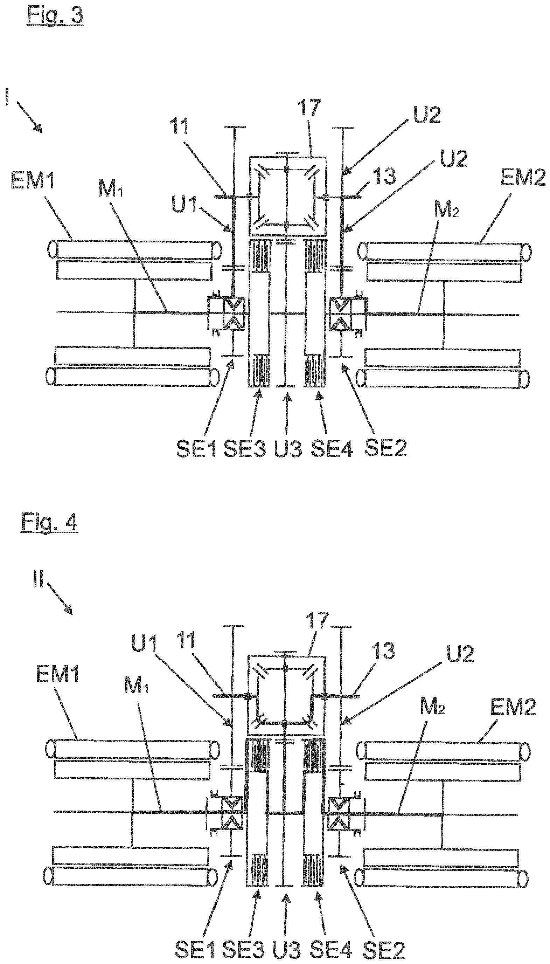

Die in der Figur 2 gezeigte Antriebsvorrichtung kann in einem ersten und einem zweiten Übersetzungsgang I, II betrieben werden. Bei geschaltetem ersten Übersetzungsgang I (Figur 3) erfolgt ein sogenannter radselektiver Antrieb, bei dem die beiden ersten Schaltelemente SE1, SE2 geschaltet sind, das heißt mittels der Schaltklaue 37 (Figur 2) der Freilauf überbrückt ist und die Elektromaschinen-Wellen 19, 21 drehfest mit den Antriebszahnrädern 23, 27 der ersten und zweiten Übersetzungsstufen U1, U2 verbunden sind. Die dritten und vierten Schaltelemente SE3, SE4 sind dagegen geöffnet. In diesem Fall kann gemäß der Figur 3 ein erster Momentenfluss M₁ von der ersten Elektromaschinen-Welle 19 über das geschaltete erste Schaltelement SE1 sowie der ersten Übersetzungsstufe U1 zur ersten Flanschwelle 11 übertragen werden. Unabhängig davon kann ein zweiter Momentenfluss M₂ von der zweiten Elektromaschinen-Welle 21 über das geschaltete zweite Schaltelement SE2 sowie der zweiten Übersetzungsstufe U2 zur zweiten Flanschwelle 13 übertragen werden.

In der Figur 4 ist im Unterschied zur Figur 3 der zweite Übersetzungsgang II geschaltet. In diesem Fall erfolgt kein radselektiver Antrieb, sondern ein sogenannter Differenzial-Antrieb, bei dem die ersten und zweiten Schaltelemente SE1, SE2 geöffnet sind und anstelle dessen die dritten und vierten Schaltelemente SE3, SE4 geschlossen sind. Dadurch erfolgt gemäß der Figur 4 ein Antriebsmomentenfluss M₁, M₂ von der ersten und zweiten Elektromaschinen-Welle 19,21 über die geschalteten dritten und vierten Schaltelemente SE3 und SE4 sowie über die dritte Übersetzungsstufe U3 in das Achsdifferenzial 17, von wo es gleichmäßig auf die linken und rechten Flanschwellen 11, 13 aufgeteilt wird.

In der Figur 4 sind bei geschaltetem zweiten Übersetzungsgang II die beiden Elektromaschinen EM1, EM2 in Betrieb. Anstelle dessen kann der zweite Übersetzungsgang II auch mit nur einer der beiden Elektromaschinen EM1, EM2 betrieben werden, da über das Achsdifferenzial 17 stets eine gleich große Antriebsmoment-Verteilung auf die erste und zweite Flanschwelle 11, 13 erfolgt.

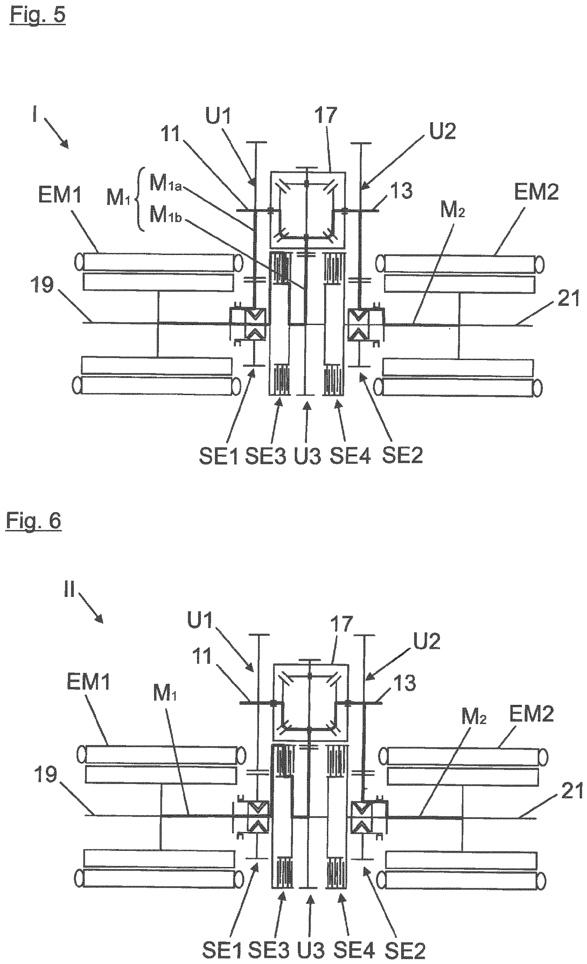

Um die Funktionsweise der Antriebsvorrichtung zu erläutern, ist in der Figur 5 eine Fahrsituation, zum Beispiel eine Kurvenfahrt, gezeigt, bei der zwischen den beiden Flanschwellen 11, 13 eine Momentendifferenz erzielt werden soll. In der Figur 5 ist die Antriebsvorrichtung bei geschaltetem ersten Übersetzungsgang I betrieben. Um eine Momenten-Umverteilung in Richtung auf das rechte Hinterrad 15 (das heißt in Richtung auf die zweite Flanschwelle 13) zu erzielen, ist in der Figur 5 zusätzlich das dritte Schaltelement SE3 geschlossen. Dadurch wird das von der ersten Elektromaschine EM1 erzeugte Antriebsmoment M₁ in ein erstes Teil-Antriebsmoment M₁ₐ und in zweites Teil-Antriebsmoment M_{1b} aufgeteilt. Das erste Teil-Antriebsmoment M₁ₐ wird über das erste Schaltelement SE1 zur ersten Flanschwelle 11 direkt übertragen. Das zweite Teil-Antriebsmoment M_{1b} wird dagegen über das geschlossene dritte Schaltelement SE3 zum Achsdifferenzial 17 übertragen und dort gleichmäßig auf die linke und rechte Flanschwelle 11, 13 aufgeteilt.

Beispielhaft ergibt sich bei einem von der ersten und zweiten Elektromaschine EM1, EM2 erzeugten Antriebsmoment M_{EM1} und M_{EM2} von 500 Nm sowie einem Übersetzungsverhältnis i₁ der ersten und zweiten Übersetzungsstufe U1 und U2 von 10 sowie einem Übersetzungsverhältnis i₃ der dritten Übersetzungsstufe U3 von 5 die folgende Konstellation: In diesem Fall würde über die erste Übersetzungsstufe U1 ein Teil-Antriebsmoment M₁ₐ von zum Beispiel 200 Nm über die erste Übersetzungsstufe U1 auf die erste Flanschwelle 11 übertragen werden. Außerdem würde beispielhaft ein zweites Teil-Antriebsmoment M_{1b} von 300 Nm auf die dritte Übersetzungsstufe U3 übertragen werden.

Die zweite Elektromaschine EM2 überträgt ihr Antriebsmoment M_{EM2} von 500 Nₘ nach wie vor über das zweite Schaltelement SE2 zur zweiten Flanschwelle 13. Es liegt daher eingangsseitig am Achsdifferenzial 17 ein Drehmoment von 1500 Nm an, das gleichmäßig auf die beiden Flanschwellen 13, 11 verteilt wird. Dadurch wird in die erste Flanschwelle 11 ein Antriebsmoment von 2750 Nm eingeleitet, während in die zweite Flanschwelle 13 ein Antriebsmoment von 5750 Nm eingeleitet wird. Somit stellt sich zwischen den beiden Flanschwellen 11, 13 eine Momentendifferenz von 3000 Nm ein, während das Gesamt-Antriebsmoment bei 8500 Nm liegt.

In der Figur 6 ist eine weitere Fahrsituation gezeigt, bei der die Antriebsvorrichtung mit geschaltetem zweiten Übersetzungsgang II betrieben wird und zum Beispiel eine Kurvenfahrt erfolgt, bei der zwischen den beiden Flanschwellen 11, 13 ebenfalls eine Momentendifferenz erzielt werden soll. In diesem Fall erfolgt die Momenten-Umverteilung dadurch, dass das dritte Schaltelement SE3 und das zweite Schaltelement SE2 geschaltet sind, während das erste Schaltelement SE1 und das vierte Schaltelement SE4 geöffnet bleiben. Bei einem von der ersten Elektromaschine EM1 erzeugten Antriebsmoment M_{EM1} von 300 Nm und bei einem von der zweiten Elektromaschine EM2 erzeugten Antriebsmoment M_{EM2} von 100 Nm ergibt sich die folgende Situation: So überträgt die erste Elektromaschine EM1 über das geschaltete dritte Schaltelement SE3 das komplette Antriebsmoment M_{EM1} auf die dritte Übersetzungsstufe U3, so dass eingangsseitig am Achsdifferenzial 1500 Nm anliegen. Diese werden gleichmäßig aufgeteilt jeweils zur ersten und zur zweiten Flanschwelle 11, 13 übertragen. Zusätzlich wird das von der zweiten Elektromaschine EM2 erzeugte Antriebsmoment von 100 Nm über das geschaltete zweite Schaltelement SE1 sowie über die zweite Übersetzungsstufe U2 auf die zweite Flanschwelle 13 übertragen, so dass sich in der zweiten Flanschwelle 13 das anliegende Drehmoment auf 1750 Nm summiert, während an der ersten Flanschwelle 11 lediglich 750 Nₘ anliegen. Dadurch ergibt sich eine Momenten-Differenz zwischen den beiden Flanschwellen 11, 13 von 1000 Nm.

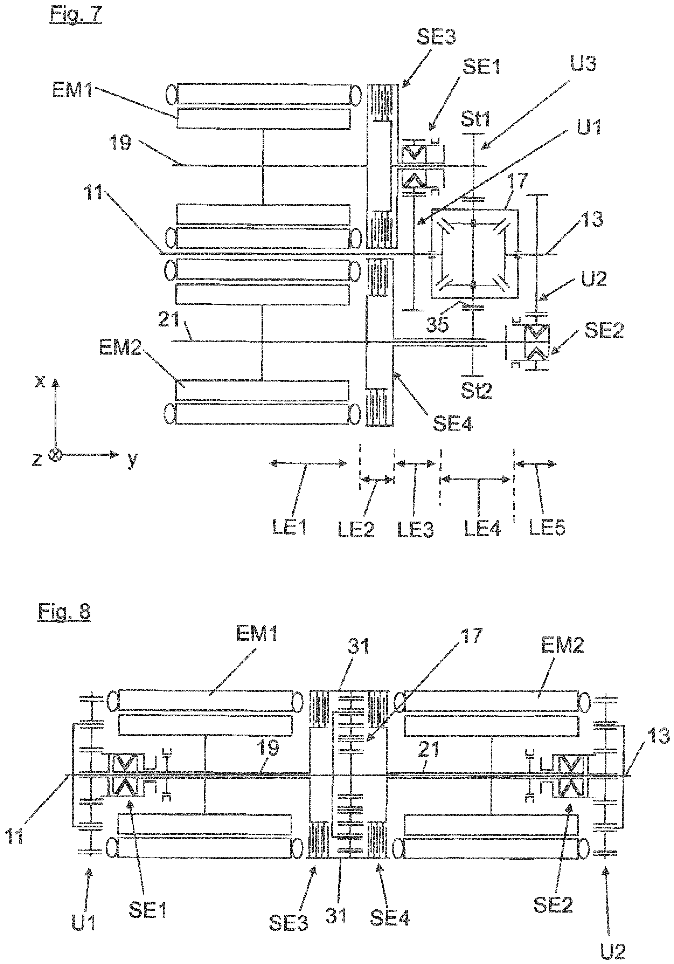

In der Figur 7 ist die Antriebsvorrichtung gemäß einer zweiten Ausführungsvariante gezeigt, bei der die ersten und zweiten Elektromaschinen EM1, EM2 in der Fahrzeuglängsrichtung x mit Bezug auf die Flanschwellen 11, 13 achsgegenüber angeordnet sind. Die beiden Elektromaschinen EM1, EM2 sind in der Fahrzeuglängsrichtung x in einer Längsebene in Flucht angeordnet. Im Unterschied zum vorangegangenen Ausführungsbeispiel weist die dritte Übersetzungsstufe U3 zwei Stirnradstufen St1, St2 auf, die jeweils das eingangsseitige Außenzahnrad 35 des Achsdifferenzials 17 antreiben. Die in der Figur 7 obere erste Stirnradstufe St1 ist über das dritte Schaltelement SE3 mit der ersten Elektromaschinen-Welle 19 koppelbar. Die zweite Stirnradstufe St2 ist über das vierte Schaltelement SE4 mit der zweiten Elektromaschinen-Welle 21 koppelbar.

Wie oben erwähnt, sind die beiden Elektromaschinen EM1, EM2 in einer ersten Längsebene LE1 angeordnet. Die dritten und vierten Schaltelemente SE3 und SE4 sind in Flucht hintereinander in einer zweiten Längsebene LE2 angeordnet, während die erste Übersetzungsstufe U1 zusammen mit dem ersten Schaltelement SE1 in einer dritten Längsebene LE3 angeordnet sind. In einer vierten Längsebene LE4 ist die dritte Übersetzungsstufe U3 zusammen mit dem Achsdifferenzial 17 angeordnet, während in einer fünften Längsebene LE5 das zweite Schaltelement SE2 zusammen mit der zweiten Übersetzungsstufe U2 angeordnet ist.

In der Figur 8 sind die Elektromaschinen EM1 und EM2 in koaxialer Anordnung zu den ersten und zweiten Flanschwellen 11, 13 positioniert. In der, in der Figur 8 gezeigten koaxialen Anordnung sind die dritten und vierten Schaltelemente SE3, SE4 sowie das Achsdifferenzial 17, das hier bauraumgünstig als ein Stirnraddifferenzial ausgeführt ist, zwischen den beiden Elektromaschinen EM1, EM2 angeordnet. Das dritte und vierte Schaltelement SE3, SE4 ist jeweils als eine Lamellenkupplung ausgeführt, von denen jeweils die beiden Außenlamellenträger über eine gemeinsame Zwischenwelle 31 miteinander verbunden sind. Die als ein Hohlrad ausgeführte Zwischenwelle 31 ist mit dem als Stirnraddifferenzial realisierten Achsdifferenzial 17 gekoppelt. In der Figur 8 sind die Elektromaschinen-Wellen 19, 21 als Hohlwellen realisiert, durch die die beiden Flanschwellen 11, 13 nach fahrzeugaußen geführt sind. Die beiden Flanschwellen 11, 13 sind in der Fahrzeugquerrichtung y außerhalb der beiden Elektromaschinen EM1, EM2 jeweils über die erste Übersetzungsstufe U1 und über die zweite Übersetzungsstufe U2 unter Zwischenschaltung des ersten Schaltelementes SE1 und des zweiten Schaltelements SE2 mit der ersten bzw. zweiten Elektromaschinen-Welle 19, 21 verbunden.

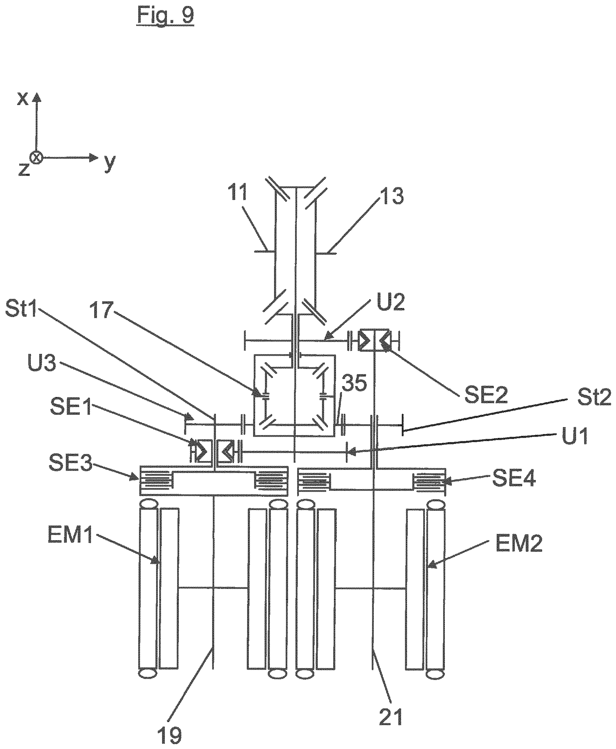

In der Figur 9 sind die beiden Elektromaschinen EM1, EM2 in einer Längs-Anordnung positioniert, in der die Elektromaschinen EM1, EM2 zueinander achsparallel sowie zu den beiden Flanschwellen 11, 13 rechtwinklig positioniert sind. Die dritte Übersetzungsstufe U3 weist (analog zur Figur 7) zwei auf die Achsdifferenzial-Eingangsseite 35 abtreibende Stirnradstufen St1, St2 auf, von denen die erste Stirnradstufe St1 (in der Figur 9 linksseitig angeordnet) über das dritte Schaltelement SE3 mit der ersten Elektromaschinen-Welle 19 koppelbar ist. Die zweite Stirnradstufe St2 ist über das vierte Schaltelement SE4 mit der zweiten Elektromaschinen-Welle 21 koppelbar.

Wie aus der Figur 9 weiter hervorgeht, sind die erste Elektromaschinen-Welle 19, das dritte Schaltelement SE3 sowie das erste Schaltelement SE1 koaxial in der Fahrzeuglängsrichtung x angeordnet. In gleicher Weise ist auch die zweite Elektromaschinen-Welle 21, das vierte Schaltelement SE4 und das zweite Schaltelement SE2 koaxial in der Fahrzeuglängsrichtung x angeordnet. Dabei sind die erste Übersetzungsstufe U1 und die zweite Übersetzungsstufe U2 in der Fahrzeuglängsrichtung x über einen Bauraum voneinander beabstandet, in dem die dritte Übersetzungsstufe U3 zusammen mit dem Achsdifferenzial 17 angeordnet ist.

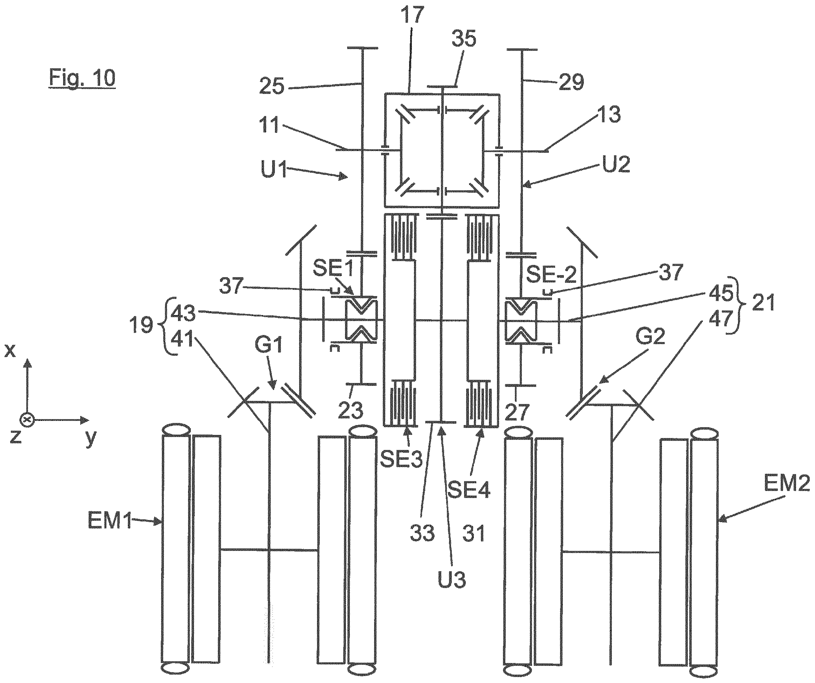

Die in der Fig. 10 gezeigte Antriebsvorrichtung ist weitgehend baugleich wie die in der Figur 2 gezeigte Antriebsvorrichtung aufgebaut. Von daher wird auf die funktions- und/oder baugleichen Komponenten verwiesen, die bereits anhand der Figur 2 erläutert worden sind. Im Unterschied zur Figur 2 sind in der Fig. 10 die ersten und zweiten Elektromaschinen EM1, EM2 nicht in der Fahrzeugquerrichtung y zueinander koaxial in Querflucht angeordnet. Vielmehr sind in der Figur 10 die beiden Elektromaschinen EM1, EM2 - wie auch in der Figur 9 - in einer Längs-Anordnung positioniert, in der die beiden Elektromaschinen EM1, EM2 zueinander achsparallel in der Fahrzeuglängsrichtung x ausgerichtet sind sowie zu den beiden Flanschwellen 11, 13 rechtwinklig positioniert sind.

In der Figur 10 ist die erste Elektromaschinen-Welle 19 aufgeteilt in einen elektromaschinenseitigen Wellenabschnitt 41 und in einen abtriebsseitigen Wellenabschnitt 43, die über eine erste Getriebestufe G1 miteinander trieblich verbunden sind. Die erste Getriebestufe G1 ist als ein Kegelradtrieb realisiert. Gemäß der Fig. 10 wirkt der elektromaschinenseitige Wellenabschnitt 41 mit dem Rotor der ersten Elektromaschine EM1 zusammen, während der abtriebsseitige Wellenabschnitt 43 über die erste Freilaufkupplung SE1 mit dem Abtriebszahnrad 23 verbunden ist, das zusammen mit dem drehfest auf der Flanschwelle 11 angeordneten Abtriebszahnrad 25 die erste Übersetzungsstufe U1 bildet. Der abtriebsseitige Wellenabschnitt 43 der ersten Elektromaschinen-Welle 19 ist außerdem über die erste Freilaufkupplung SE1 hinaus nach fahrzeuginnen verlängert und drehfest am Kupplungsgehäuse (das heißt am Außenlamellenträger) des dritten Schaltelementes SE3 angebunden.

In gleicher Weise ist auch die zweite Elektromaschinen-Welle 21 aufgeteilt in einen elektromaschinenseitigen Wellenabschnitt 47 und in einen abtriebsseitigen Wellenabschnitt 45, die über eine zweite Getriebestufe G2 miteinander verbunden sind, die ebenfalls als ein Kegelradtrieb realisiert ist. Der abtriebsseitige Wellenabschnitt 45 der zweiten Elektromaschinen-Welle 21 ist über die zweite Freilaufkupplung SE2 mit dem Abtriebszahnrad 27 verbunden, das zusammen mit dem drehfest auf der zweiten Flanschwelle 13 angeordneten Abtriebszahnrad 29 die zweite Übersetzungsstufe U2 bildet. Zudem ist auch der abtriebsseitige Wellenabschnitt 45 der zweiten Elektromaschinen-Welle 21 über die zweite Freilaufkupplung SE2 hinaus nach fahrzeuginnen verlagert und drehfest am Kupplungsgehäuse des vierten Schaltelementes SE4 angebunden.

## Patentansprüche

1. Antriebsvorrichtung für eine Fahrzeugachse, insbesondere Hinterachse (HA), eines zweispurigen Fahrzeugs mit elektrischem Antrieb, wobei jedem Fahrzeugrad (15) der Fahrzeugachse (HA) eine Elektromaschine (EM1, EM2) zugeordnet ist, deren Elektromaschinen-Wellen (19, 21) über jeweils ein erstes und ein zweites Schaltelement (SE1, SE2) trieblich mit einer ersten und einer zweiten Flanschwelle (11, 13) der Fahrzeugräder (15) verbindbar sind, und wobei in einem ersten Übersetzungsgang (I) das erste und das zweite Schaltelement (SE1, SE2) geschaltet sind und die Elektromaschinenwellen (19, 21) über die ersten und zweiten Schaltelemente (SE1, SE2) direkt auf die Flanschwellen (11, 13) der Fahrzeugräder (15) abtreiben, wobei die Fahrzeugachse (HA) ein Achsdifferenzial (17) aufweist, das ausgangsseitig auf die Flanschwellen (11, 13) der Fahrzeugräder (15) abtreibt und eingangsseitig trieblich über ein drittes und viertes Schaltelement (SE3, SE4) mit den Elektromaschinen-Wellen (19, 21) verbindbar ist, und dass in einem zweiten Übersetzungsgang (II) die dritten und/oder vierten Schaltelemente (SE3, SE4) geschlossen sind und die erste und/oder zweite Elektromaschinen-Welle (19, 21) über das dritte und/oder vierte Schaltelement (SE3, SE4) und das Achsdifferenzial (17) auf die Flanschwelle (11, 13) abtreiben, wobei bei geschaltetem ersten Übersetzungsgang (I) ein radselektiver Antrieb erfolgt, bei dem ein erster Momentenfluss (M₁) von der ersten Elektromaschine (EM1) über das erste Schaltelement (SE1) zur ersten Flanschwelle (11) übertragen wird, und unabhängig, das heißt trieblich entkoppelt, davon ein zweiter Momentenfluss (M₂) von der zweiten Elektromaschine (EM2) über das zweite Schaltelement (SE2) zur zweiten Flanschwelle (13) übertragen wird, und bei geschaltetem ersten Übersetzungsgang (I) die dritten und vierten Schaltelemente (SE3, SE4) geöffnet sind, **dadurch gekennzeichnet, dass** für eine bei geschaltetem ersten Übersetzungsgang (I) erfolgende Umverteilung der auf das linke und rechte Fahrzeugrad (15) wirkenden Antriebsmomente das dritte oder vierte Schaltelement (SE3, SE4) geschlossen wird, wodurch das von der ersten oder zweiten Elektromaschine (EM1, EM2) erzeugte Antriebsmoment in ein Teil-Antriebsmoment (M₁ₐ), das über das erste oder zweite Schaltelement (SE1, SE2) direkt zur ersten oder zweiten Flanschwelle (11, 13) übertragen wird, und in ein Teil-Antriebsmoment (M_{1b}) aufgeteilt wird, das über das dritte oder vierte Schaltelement (SE3, SE4) zum Achsdifferenzial (17) übertragen wird und dort gleichmäßig auf das linke und rechte Fahrzeugrad (15) aufgeteilt wird.

2. Antriebsvorrichtung nach Anspruch 1, **dadurch gekennzeichnet, dass** das Achsdifferenzial (17) so ausgelegt ist, dass eine gleich große Antriebsmoment-Verteilung auf die erste und zweite Flanschwelle (11, 13) erfolgt.

3. Antriebsvorrichtung nach einem der vorhergehenden Ansprüche, **dadurch gekennzeichnet, dass** bei geschaltetem zweiten Übersetzungsgang (II) ein Differenzial-Antrieb erfolgt, bei dem die ersten und zweiten Schaltelemente (SE1, SE2) geöffnet sind, und ein von der ersten und/oder zweiten Elektromaschine (EM1, EM2) erzeugtes Antriebsmoment über das dritte und/oder vierte Schaltelement (SE3, SE4) zum Achsdifferenzial (17) übertragen wird.

4. Antriebsvorrichtung nach Anspruch 3, **dadurch gekennzeichnet, dass** für eine bei geschaltetem zweiten Übersetzungsgang (II) erfolgende Umverteilung der auf das linke und rechte Fahrzeugrad (15) wirkenden Antriebsmomente das erste oder zweite Schaltelement (SE1, SE2) geschlossen wird, wodurch das von der ersten oder zweiten Elektromaschine (EM1, EM2) erzeugte Antriebsmoment in ein Teilmoment, das über das erste oder zweite Schaltelement (SE1, SE2) direkt zur ersten oder zweiten Flanschwelle (11, 13) übertragen wird, und in ein Teilmoment aufgeteilt wird, das über das dritte oder vierte Schaltelement (SE3, SE4) zum Achsdifferenzial (17) übertragen wird und dort gleichmäßig auf die linken und rechten Fahrzeugräder (15) aufgeteilt wird.

5. Antriebsvorrichtung nach einem der vorhergehenden Ansprüche, **dadurch gekennzeichnet, dass** die erste und die zweite Elektromaschinen-Welle (19, 21) jeweils über eine erste und eine zweite Übersetzungsstufe (U1, U2), insbesondere Stirnradstufen, mit den ersten und zweiten Flanschwellen (11, 13) verbunden sind.

6. Antriebsvorrichtung nach Anspruch 5, **dadurch gekennzeichnet, dass** die erste und die zweite Elektromaschinen-Welle (19, 21) über die dritten und vierten Schaltelemente (SE3, SE4) mit zumindest einer Zwischenwelle (31) koppelbar ist, die über eine dritte Übersetzungsstufe (U3), insbesondere eine Stirnradstufe, auf die Eingangsseite (35) des Achsdifferenzials (17) abtreibt.

7. Antriebsvorrichtung nach einem der vorhergehenden Ansprüche, **dadurch gekennzeichnet, dass** die ersten und zweiten Elektromaschinen-Wellen (EM1, EM2) in einer achsparallelen Anordnung zu den ersten und zweiten Flanschwellen (11, 13) positioniert sind, in der die ersten und zweiten Elektromaschinen (EM1, EM2) mit Bezug auf eine Fahrzeugmittellängsebene (M) spiegelbildlich positioniert sind und die Elektromaschinen-Wellen (19, 21) in der Fahrzeugquerrichtung (y) aufeinander zulaufen.

8. Antriebsvorrichtung nach Anspruch 6, **dadurch gekennzeichnet, dass** die erste und die zweite Übersetzungsstufe (U1, U2) in der Fahrzeugquerrichtung (y) innerhalb der beiden Elektromaschinen (EM1, EM2) angeordnet sind, und dass in der Fahrzeugquerrichtung (y) zwischen den beiden Übersetzungsstufen (U1, U2) ein Bauraum für die dritten und vierten Schaltelemente (SE3, SE4) und für das Achsdifferenzial (17) bereitgestellt ist.

9. Antriebsvorrichtung nach Anspruch 8, **dadurch gekennzeichnet, dass** die Elektromaschinen-Wellen (19, 21) über die dritten und vierten Schaltelemente (SE3, SE4) mit genau einer gemeinsamen Zwischenwelle (31) koppelbar ist.

10. Antriebsvorrichtung nach einem der Ansprüche 1 bis 6, **dadurch gekennzeichnet, dass** die ersten und zweiten Elektromaschinen (EM1, EM2) in der Fahrzeuglängsrichtung (x) mit Bezug auf die Flanschwellen (11, 13) achsgegenüber angeordnet sind, und dass insbesondere die beiden Elektromaschinen (EM1, EM2) in der Fahrzeuglängsrichtung (x) in Flucht angeordnet sind.

11. Antriebsvorrichtung nach Anspruch 6 in Kombination mit Anspruch 10, **dadurch gekennzeichnet, dass** die dritte Übersetzungsstufe (U3) zwei auf die Achsdifferenzial-Eingangsseite (35) abtreibende Stirnradstufen aufweist, von denen eine erste Stirnradstufe über das dritte Schaltelement (SE3) mit der ersten Elektromaschinen-Welle (19) koppelbar ist, und eine zweite Stirnradstufe über das vierte Schaltelement (SE4) mit der zweiten Elektromaschinen-Welle (21) koppelbar ist.

12. Antriebsvorrichtung nach Anspruch 11, **dadurch gekennzeichnet, dass** die beiden Elektromaschinen (EM1, EM2) in einer ersten Längsebene (LE1), die dritten und vierten Schaltelemente (SE3, SE4) in einer zweiten Längsebene (LE2), das erste Schaltelement (SE1) und die erste Übersetzungsstufe (U1) in einer dritten Längsebene (LE3), die dritte Übersetzungsstufe (U3) und das Achsdifferenzial (17) in einer vierten Längsebene (LE4) und das zweite Schaltelement (SE2) und die zweite Übersetzungsstufe (U2) in einer fünften Längsebne (LE5) angeordnet sind.

13. Antriebsvorrichtung nach einem der Ansprüche 1 bis 6, **dadurch gekennzeichnet, dass** die Elektromaschinen (EM1, EM2) sowie die ersten und zweiten Flanschwellen (11, 13) in einer koaxialen Anordnung positioniert sind, in welcher koaxialen Anordnung die dritten und vierten Schaltelemente (SE3, SE4) sowie das Achsdifferenzial (17) in der Fahrzeugquerrichtung (y) zwischen den Elektromaschinen (EM1, EM2) angeordnet sind, und dass die Elektromaschinen-Wellen (19, 21) als Hohlwellen ausgeführt sind, durch die die Flanschwellen (11, 13) nach fahrzeugaußen geführt sind.

14. Antriebsvorrichtung nach Anspruch 5 in Kombination mit Anspruch 13, **dadurch gekennzeichnet, dass** die erste und die zweite Übersetzungsstufe (U1, U2) jeweils in der Fahrzeugquerrichtung (y) außerhalb der Elektromaschinen (EM1, EM2) angeordnet sind.

15. Antriebsvorrichtung nach einem der Ansprüche 1 bis 6, **dadurch gekennzeichnet, dass** die beiden Elektromaschinen (EM1, EM2) in einer Längs-Anordnung positioniert sind, in welcher Längs-Anordnung die Elektromaschinen (EM1, EM2) mit ihren Elektromaschinen-Wellen (19, 21) achsparallel zueinander sowie rechtwinklig zu den Flanschwellen (11, 13) positioniert sind.

16. Antriebsvorrichtung nach Anspruch 6 in Kombination mit Anspruch 15, **dadurch gekennzeichnet, dass** die dritte Übersetzungsstufe (U3) zwei auf die Achsdifferenzial-Eingangsseite (35) abtreibenden Stirnradstufen aufweist, von denen eine erste Stirnradstufe (St1) über das dritte Schaltelement (SE3) mit der ersten Elektromaschinen-Welle (19) koppelbar ist, und eine zweite Stirnradstufe (St2) über das vierte Schaltelement (SE4) mit der zweiten Elektromaschinen-Welle (21) koppelbar ist.

17. Antriebsvorrichtung nach Anspruch 16, **dadurch gekennzeichnet, dass** die erste Elektromaschinen-Welle (19), das dritte Schaltelement (SE3) und das erste Schaltelement (SE1) koaxial in der Fahrzeuglängsrichtung (x) angeordnet sind, und dass die zweite Elektromaschinen-Welle (21), das vierte Schaltelement (SE4) und das zweite Schaltelement (SE2) koaxial in der Fahrzeuglängsrichtung (x) angeordnet sind.

18. Antriebsvorrichtung nach Anspruch 6 in Kombination mit Anspruch 16 oder 17, **dadurch gekennzeichnet, dass** zwischen der ersten Übersetzungsstufe (U1) und der zweiten Übersetzungsstufe (U2) in der Fahrzeuglängsrichtung (x) ein Bauraum bereitgestellt ist, in dem die dritte Übersetzungsstufe (U3) zusammen mit dem Achsdifferenzial (17) angeordnet sind.

## Claims

1. Drive device for a vehicle axle, in particular a rear axle (HA), of a two-track vehicle with an electric drive, wherein an electric machine (EM1, EM2) is associated with every vehicle wheel (15) of the vehicle axle (HA), the electric machine shafts (19, 21) of which electric machine can be drivingly connected, by means of a first and a second shifting element (SE1, SE2), to a first and a second flange shaft (11, 13) of the vehicle wheels (15), and wherein in a first transmission gear (I), the first and the second shifting element (SE1, SE2) are shifted and the electric machine shafts (19, 21) output directly to the flange shafts (11, 13) of the vehicle wheels (15) via the first and the second shifting elements (SE1, SE2), wherein the vehicle axle (HA) has a transverse differential (17) which, on the output side, outputs to the flange shafts (11, 13) of the vehicle wheels (15) and, on the input side, can be drivingly connected to the electric machine shafts (19, 21) by means of a third and a fourth shifting element (SE3, SE4), and that in a second transmission gear (II), the third and/or the fourth shifting elements (SE3, SE4) are closed and the first and/or second electric machine shafts (19, 21) output to the flange shaft (11, 13) via the third and/or fourth shifting element (SE3, SE4) and the transverse differential (17), wherein, when the first transmission gear (I) is shifted, a wheel-selective drive takes place, in which a first torque flow (M₁) from the first electric machine (EM1) is transmitted via the first shifting element (SE1) to the first flange shaft (11) and independently thereof, i.e. drivingly decoupled therefrom, a second torque flow (M₂) from the second electric machine (EM2) is transmitted via the second shifting element (SE2) to the second flange shaft (13), and, when the first transmission gear (I) is shifted, the third and fourth shifting elements (SE3, SE4) are open, **characterised in that**, for a redistribution of the drive torques acting on the left and right vehicle wheels (15) that takes place with shifted first transmission gear (I), the third or fourth shifting element (SE3, SE4) is closed, as a result of which the drive torque generated by the first or second electric machine (EM1, EM2) is allocated into a partial drive torque (M₁ₐ), which is transmitted via the first or second shifting element (SE1, SE2) directly to the first or second flange shaft (11, 13), and into a partial drive torque (M_{1b}), which is transmitted via the third or fourth shifting element (SE3, SE4) to the transverse differential (17) and is allocated there uniformly onto the left and right vehicle wheels (15).

2. Drive device according to claim 1, **characterised in that** the transverse differential (17) is designed in such a way that an equally large drive torque distribution onto the first and second flange shafts (11, 13) takes place.

3. Drive device according to any of the preceding claims, **characterised in that**, when the second transmission gear (II) is shifted, a differential drive takes place, in which the first and second shifting elements (SE1, SE2) are open, and a drive torque generated by the first and/or second electric machine (EM1, EM2) is transmitted via the third and/or fourth shifting element (SE3, SE4) to the transverse differential (17).

4. Drive device according to claim 3, **characterised in that**, for a redistribution of the drive torques acting on the left and right vehicle wheels (15) that takes place with shifted second transmission gear (II), the first or second shifting element (SE1, SE2) is closed, as a result of which the drive torque generated by the first or second electric machine (EM1, EM2) is allocated into a partial drive torque, which is transmitted via the first or second shifting element (SE1, SE2) directly to the first or second flange shaft (11, 13), and into a partial drive torque, which is transmitted via the third or fourth shifting element (SE3, SE4) to the transverse differential (17) and is allocated there uniformly onto the left and right vehicle wheels (15).

5. Drive device according to any of the preceding claims, **characterised in that** the first and the second electric machine shafts (19, 21) are each connected via a first and a second transmission step (U1, U2), in particular spur gear steps, to the first and second flange shafts (11, 13).

6. Drive device according to claim 5, **characterised in that** the first and the second electric machine shaft (19, 21) can be coupled via the third and fourth shifting elements (SE3, SE4) to at least one intermediate shaft (31), which outputs via a third transmission step (U3), in particular a spur gear step, to the input side (35) of the transverse differential (17).

7. Drive device according to any of the preceding claims, **characterised in that** the first and second electric machine shafts (EM1, EM2) are positioned in an axially-parallel arrangement to the first and second flange shafts (11, 13), in which the first and second electric machines (EM1, EM2) are positioned in a mirror image with respect to a vehicle centre longitudinal plane (M) and the electric machine shafts (19, 21) extend toward one another in the vehicle transverse direction (y).

8. Drive device according to claim 6, **characterised in that** the first and the second transmission steps (U1, U2) are arranged inside the two electric machines (EM1, EM2) in the vehicle transverse direction (y), and **in that** an installation space for the third and fourth shifting elements (SE3, SE4) and for the transverse differential (17) is provided in the vehicle transverse direction (y) between the two transmission steps (U1, U2).

9. Drive device according to claim 8, **characterised in that** the electric machine shafts (19, 21) can be coupled via the third and fourth shifting elements (SE3, SE4) to precisely one common intermediate shaft (31).

10. Drive device according to any of claims 1 to 6, **characterised in that** the first and second electric machines (EM1, EM2) are arranged axially opposing in the vehicle longitudinal direction (x) with respect to the flange shafts (11, 13), and **in that** in particular the two electric machines (EM1, EM2) are arranged in alignment in the vehicle longitudinal direction (x).

11. Drive device according to claim 6 in combination with claim 10, **characterised in that** the third transmission step (U3) has two spur gear steps outputting to the transverse differential input side (35), of which a first spur gear step can be coupled via the third shifting element (SE3) to the first electric machine shaft (19), and a second spur gear step can be coupled via the fourth shifting element (SE4) to the second electric machine shaft (21).

12. Drive device according to claim 11, **characterised in that** the two electric machines (EM1, EM2) are arranged in a first longitudinal plane (LE1), the third and fourth shifting elements (SE3, SE4) are arranged in a second longitudinal plane (LE2), the first shifting element (SE1) and the first transmission step (U1) are arranged in a third longitudinal plane (LE3), the third transmission step (U3) and the transverse differential (17) are arranged in a fourth longitudinal plane (LE4) and the second shifting element (SE2) and the second transmission step (U2) are arranged in a fifth longitudinal plane (LE5).

13. Drive device according to any of claims 1 to 6, **characterised in that** the electric machines (EM1, EM2) and the first and second flange shafts (11, 13) are positioned in a coaxial arrangement, in which coaxial arrangement the third and fourth shifting elements (SE3, SE4) and the transverse differential (17) are arranged between the electric machines (EM1, EM2) in the vehicle transverse direction (y), and **in that** the electric machine shafts (19, 21) are embodied as hollow shafts, through which the flange shafts (11, 13) are guided toward the vehicle exterior.

14. Drive device according to claim 5 in combination with claim 13, **characterised in that** the first and the second transmission steps (U1, U2) are each arranged outside the electric machines (EM1, EM2) in the vehicle transverse direction (y).

15. Drive device according to any of claims 1 to 6, **characterised in that** the two electric machines (EM1, EM2) are positioned in a longitudinal arrangement, in which longitudinal arrangement the electric machines (EM1, EM2) are positioned with their electric machine shafts (19, 21) axially parallel to one another and perpendicular to the flange shafts (11, 13).

16. Drive device according to claim 6 in combination with claim 15, **characterised in that** the third transmission step (U3) has two spur gear steps outputting to the transverse differential input side (35), of which a first spur gear step (St1) can be coupled via the third shifting element (SE3) to the first electric machine shaft (19), and a second spur gear step (St2) can be coupled via the fourth shifting element (SE4) to the second electric machine shaft (21).

17. Drive device according to claim 16, **characterised in that** the first electric machine shaft (19), the third shifting element (SE3) and the first shifting element (SE1) are arranged coaxially in the vehicle longitudinal direction (x), and **in that** the second electric machine shaft (21), the fourth shifting element (SE4) and the second shifting element (SE2) are arranged coaxially in the vehicle longitudinal direction (x).

18. Drive device according to claim 6 in combination with claim 16 or 17, **characterised in that** an installation space, in which the third transmission step (U3) are arranged together with the transverse differential (17), is provided between the first transmission step (U1) and the second transmission step (U2) in the vehicle longitudinal direction (x).

## Revendications

1. Dispositif d'entraînement moteur pour un essieu de véhicule, en particulier essieu arrière (HA), d'un véhicule à deux voies avec entraînement électrique, dans lequel un moteur électrique (EM1, EM2) est associé à chaque roue de véhicule (15) de l'essieu de véhicule (HA), dont les arbres de moteur électrique (19, 21) peuvent être mis en liaison motrice avec un premier et un deuxième arbre de bride (11, 13) des roues de véhicule (15) par le biais de respectivement un premier et un deuxième élément de commutation (SE1, SE2), et dans lequel dans un premier rapport de transmission (I) le premier et le deuxième élément de commutation (SE1, SE2) sont commutés et les arbres de moteur électrique (19, 21) sortent directement sur les arbres de bride (11, 13) des roues de véhicule (15) par le biais des premier et deuxième éléments de commutation (SE1, SE2), dans lequel l'essieu de véhicule (HA) présente un différentiel d'essieu (17), qui sort côté sortie sur les arbres de bride (11, 13) des roues de véhicule (15) et peut être mis en liaison motrice avec les arbres de moteur électrique (19, 21) par le biais d'un troisième et quatrième élément de commutation (SE3, SE4), et que dans un deuxième rapport de transmission (II), les troisième et/ou quatrième éléments de commutation (SE3, SE4) sont fermés et le premier et/ou deuxième arbre de moteur électrique (19, 21) sortent par le biais du troisième et/ou quatrième élément de commutation (SE3, SE4) et du différentiel d'essieu (17) sur l'arbre de bride (11, 13), dans lequel en cas de premier rapport de transmission (I) commuté, un entraînement sélectif par roue a lieu, dans lequel un premier flux de couple (M₁) est transmis du premier moteur électrique (EM1) par le biais du premier élément de commutation (SE1) au premier arbre de bride (11), et indépendamment de cela, autrement dit par découplage moteur, un deuxième flux de couple (M₂) est transmis du deuxième moteur électrique (EM2) par le biais du deuxième élément de commutation (SE2) au deuxième arbre de bride (13), et en cas de premier rapport de transmission (I) commuté, les troisième et quatrième éléments de commutation (SE3, SE4) sont ouverts, **caractérisé en ce que** pour une redistribution ayant lieu en cas de premier rapport de transmission (I) commuté des couples d'entraînement agissant sur la roue de véhicule (15) gauche et droite, le troisième ou quatrième élément de commutation (SE3, SE4) est fermé, ce par quoi le couple d'entraînement généré par le premier ou deuxième moteur électrique (EM1, EM2) est divisé en un couple d'entraînement partiel (M₁ₐ), qui est transmis directement au premier ou deuxième arbre de bride (11, 13) par le biais du premier ou deuxième élément de commutation (SE1, SE2), et en un couple d'entraînement partiel (M_{1b}), qui est transmis au différentiel d'essieu (17) par le biais du troisième ou quatrième élément de commutation (SE3, SE4) et y est divisé uniformément sur la roue de véhicule (15) gauche et droite.

2. Dispositif d'entraînement moteur selon la revendication 1,
**caractérisé en ce que** le différentiel d'essieu (17) est conçu de sorte qu'une distribution de couple d'entraînement de même taille sur le premier et deuxième arbre de bride (11, 13) a lieu.

3. Dispositif d'entraînement moteur selon l'une quelconque des revendications précédentes, **caractérisé en ce qu'**en cas de deuxième rapport de transmission (II) commuté, un entraînement de différentiel a lieu, dans lequel les premier et deuxième éléments de commutation (SE1, SE2) sont ouverts, et un couple d'entraînement généré par le premier et/ou deuxième moteur électrique (EM1, EM2) est transmis au différentiel d'essieu (17) par le biais du troisième et/ou quatrième élément de commutation (SE3, SE4).

4. Dispositif d'entraînement moteur selon la revendication 3, **caractérisé en ce que** pour une redistribution ayant lieu en cas de deuxième rapport de transmission (II) commuté des couples d'entraînement agissant sur la roue de véhicule (15) gauche et droite, le premier ou deuxième élément de commutation (SE1, SE2) est fermé, ce par quoi le couple d'entraînement généré par le premier ou deuxième moteur électrique (EM1, EM2) est divisé en un couple partiel, qui est transmis directement au premier ou deuxième arbre de bride (11, 13) par le biais du premier ou deuxième élément de commutation (SE1, SE2), et en un couple partiel, qui est transmis au différentiel d'essieu (17) par le biais du troisième ou quatrième élément de commutation (SE3, SE4) et y divisé uniformément sur les roues de véhicule (15) gauche et droite.

5. Dispositif d'entraînement moteur selon l'une quelconque des revendications précédentes, **caractérisé en ce que** le premier et le deuxième arbre de moteur électrique (19, 21) sont reliés respectivement par le biais d'un premier et d'un deuxième niveau de transmission (U1, U2), en particulier des niveaux de roue droite, aux premier et deuxième arbres de bride (11, 13).

6. Dispositif d'entraînement moteur selon la revendication 5, **caractérisé en ce que** le premier et le deuxième arbre de moteur électrique (19, 21) peut être couplé par le biais des troisième et quatrième éléments de commutation (SE3, SE4) avec au moins un arbre intermédiaire (31), qui sort par le biais d'un troisième niveau de transmission (U3), en particulier un niveau de roue droite, sur le côté entrée (35) du différentiel d'essieu (17).

7. Dispositif d'entraînement moteur selon l'une quelconque des revendications précédentes, **caractérisé en ce que** les premier et deuxième arbres de moteur électrique (EM1, EM2) sont positionnés dans un agencement parallèle à l'essieu par rapport aux premier et deuxième arbres de bride (11, 13), dans lequel les premier et deuxième moteurs électriques (EM1, EM2) sont positionnés en miroir par rapport à un plan longitudinal médian de véhicule (M) et les arbres de moteur électrique (19, 21) convergent dans la direction transversale du véhicule (y).

8. Dispositif d'entraînement moteur selon la revendication 6, **caractérisé en ce que** le premier et le deuxième niveau de transmission (U1, U2) sont agencés dans la direction transversale du véhicule (y) à l'intérieur des deux moteurs électriques (EM1, EM2), et que dans la direction transversale du véhicule (y) entre les deux niveaux de transmission (U1, U2) un espace de montage est mis à disposition pour les troisième et quatrième éléments de commutation (SE3, SE4) et pour le différentiel d'essieu (17).

9. Dispositif d'entraînement moteur selon la revendication 8, **caractérisé en ce que** les arbres de moteur électrique (19, 21) peut être couplé avec exactement un arbre intermédiaire (31) commun par le biais des troisième et quatrième éléments de commutation (SE3, SE4).

10. Dispositif d'entraînement moteur selon l'une quelconque des revendications 1 à 6, **caractérisé en ce que** les premier et deuxième moteurs électriques (EM1, EM2) sont agencés par rapport à l'essieu dans la direction longitudinale du véhicule (x) par rapport aux arbres de bride (11, 13), et que en particulier les deux moteurs électriques (EM1, EM2) sont agencés alignés dans la direction longitudinale du véhicule (x).

11. Dispositif d'entraînement moteur selon la revendication 6 combinée à la revendication 10, **caractérisé en ce que** le troisième niveau de transmission (U3) présente deux niveaux de roue droite sortant sur le côté entrée de différentiel d'essieu (35), dont un premier niveau de roue droite peut être couplé par le biais du troisième élément de commutation (SE3) avec le premier arbre de moteur électrique (19), et un deuxième niveau de roue droite peut être couplé par le biais du quatrième élément de commutation (SE4) avec le deuxième arbre de moteur électrique (21).

12. Dispositif d'entraînement moteur selon la revendication 11, **caractérisé en ce que** les deux moteurs électriques (EM1, EM2) sont agencés dans un premier plan longitudinal (LE1), les troisième et quatrième éléments de commutation (SE3, SE4) dans un deuxième plan longitudinal (LE2), le premier élément de commutation (SE1) et le premier niveau de transmission (U1) dans un troisième plan longitudinal (LE3), le troisième niveau de transmission (U3) et le différentiel d'essieu (17) dans un quatrième plan longitudinal (LE4) et le deuxième élément de commutation (SE2) et le deuxième niveau de transmission (U2) dans un cinquième plan longitudinal (LE5).

13. Dispositif d'entraînement moteur selon l'une quelconque des revendications 1 à 6, **caractérisé en ce que** les moteurs électriques (EM1, EM2) ainsi que les premier et deuxième arbres de bride (11, 13) sont positionnés dans un agencement coaxial, dans lequel agencement coaxial les troisième et quatrième éléments de commutation (SE3, SE4) ainsi que le différentiel d'essieu (17) sont agencés dans la direction transversale du véhicule (y) entre les moteurs électriques (EM1, EM2), et que les arbres de moteur électrique (19, 21) sont réalisés en tant qu'arbres ceux, par lesquels les arbres de bride (11, 13) sont guidés vers l'extérieur du véhicule.

14. Dispositif d'entraînement moteur selon la revendication 5 combinée à la revendication 13, **caractérisé en ce que** le premier et le deuxième niveau de transmission (U1, U2) sont agencés respectivement dans la direction transversale du véhicule (y) à l'extérieur des moteurs électriques (EM1, EM2).

15. Dispositif d'entraînement moteur selon l'une quelconque des revendications 1 à 6, **caractérisé en ce que** les deux moteurs électriques (EM1, EM2) sont positionnés dans un agencement longitudinal, dans lequel agencement longitudinal les moteurs électriques (EM1, EM2) sont positionnés avec leurs arbres de moteur électrique (19, 21) parallèlement à l'essieu l'un par rapport à l'autre ainsi qu'en angle droit par rapport aux arbres de bride (11, 13).

16. Dispositif d'entraînement moteur selon la revendication 6 combinée à la revendication 15, **caractérisé en ce que** le troisième niveau de transmission (U3) présente deux niveaux de roue droite sortant sur le côté entrée de différentiel d'essieu (35), dont un premier niveau de roue droite (St1) peut être couplé par le biais du troisième élément de commutation (SE3) avec le premier arbre de moteur électrique (19), et un deuxième niveau de roue droite (St2) peut être couplé par le biais du quatrième élément de commutation (SE4) avec le deuxième arbre de moteur électrique (21).

17. Dispositif d'entraînement moteur selon la revendication 16, **caractérisé en ce que** le premier arbre de moteur électrique (19), le troisième élément de commutation (SE3) et le premier élément de commutation (SE1) sont agencés coaxialement dans la direction longitudinale du véhicule (x), et que le deuxième arbre de moteur électrique (21), le quatrième élément de commutation (SE4) et le deuxième élément de commutation (SE2) sont agencés coaxialement dans la direction longitudinale du véhicule (x).

18. Dispositif d'entraînement moteur selon la revendication 6 combinée à la revendication 16 ou 17, **caractérisé en ce qu'**un espace de montage est mis à disposition entre le premier niveau de transmission (U1) et le deuxième niveau de transmission (U2) dans la direction longitudinale du véhicule (x), dans lequel le troisième niveau de transmission (U3) sont agencés conjointement avec le différentiel d'essieu (17).
